# EUROPEAN PATENT SPECIFICATION

(11) **EP 1 106 073 B1**
(45) Date of publication and mention of the grant of the patent: **20.08.2008**
(21) Application number: 99957002.1
(22) Date of filing: 10.06.1999
(51) Int. Cl.: A23G 1/00, A23G 1/02

(54) **COCOA POWDER RICH IN POLYPHENOLS, PROCESS FOR PRODUCING THE SAME AND MODIFIED COCOA CONTAINING THE SAME**
KAKAOPULVER REICH AN POLYPHENOLEN, VERFAHREN ZUR HERSTELLUNG DESSELBEN SOWIE DIESES ENTHALTENDER MODIFIZIERTER KAKAO
CACAO EN POUDRE RICHE EN POLYPHENOLS, SON PROCEDE DE FABRICATION, ET CACAO MODIFIE LE CONTENANT

(30) Priority: 18.06.1998 JP 17132398
(43) Date of publication of application: 13.06.2001
(73) Proprietor: Meiji Seika Kaisha, Ltd., Chuo-ku, Tokyo 104-0031 (JP)
(72) Inventor: TANAKA, Masahiro, Meiji Seika Kaisha Ltd., Sakado-shi, Saitama 350-0214 (JP); TERAUCHI, Masakazu, Meiji Seika Kaisha Ltd., Sakado-shi, Saitama 350-0214 (JP)
(74) Representative: Vossius & Partner
(86) International application number: PCT/JP1999/003108
(87) International publication number: WO 1999/065322

(56) References cited:
- WO-A1-96/10404
- GB-A- 1 399 269
- JP-A- 3 043 044
- JP-A- 9 224 606
- JP-A- 55 135 546
- JP-A- 59 169 452
- JP-A- 59 227 245
- US-A- 2 558 854
- US-A- 3 056 677
- US-A- 4 758 444
- US-A- 4 784 866

## Description

The present invention relates to a process for treating cacao beans and more particularly, a cacao powder rich in polyphenols (i.e., cacao powder having a cacao polyphenol content of 7-11%), a process for the preparation thereof and prepared cacao comprising the same.

A conventional cacao powder has been prepared through steps of crushing washed raw cacao beans to remove the shell and embryo and obtain cacao nibs, treating with an alkali the cacao nibs, roasting the cacao nibs, grinding the roasted cacao nibs, expressing oil, and pulverizing the substance from which the oil was expressed.

In general, the alkali and roasting treatments are started with such initial conditions that an amount of water is 10 - 25% by weight inclusive of moisture in the cacao nibs and the pH is 6.8 - 8.0.

The cacao preparation is made by adding sugar, powdered milk and the like to the cacao powder prepared as above to adjust its taste, and if necessary, agglomerating the resulting mixed powder. A cacao beverage prepared by dissolving the prepared cacao with hot water has been widely and habitually drunk.
Meanwhile, the polyphenols have received attendance and became substances of great interest, since reports have been made in recent studies that these compounds exhibit various biologically favorable functions including their anti-oxidating action, anti-dental caries action, action for preventing arteriosclerosis, inhibiting action of carcinogenesis, anti-stressing action, anti-bacillus and virus actions, anti-allergie action and others.

However, a cacao polyphenol ( abbreviated hereinafter as "CMP") which is one of the polyphenols and is contained in the cacao beans shows astringency and bitterness, and thus a cacao powder containing CMP in higher amounts can not be said as being preferable from the view point of taste. In conventional processes for preparing cacao powder, therefore, the cacao nibs are treated with alkali to increase solubility and reduce the astringency and bitterness. In other words, the process reduces the amount of CMP originally present in the cacao beans. Therefore, there is no measure other than increasing the intaking amount of the cacao beverage or using a cacao preparation which contains the cacao powder in an excess amount, not being well-balanced with the sugar and milk and not being preferable from view point of taste, in order to intake the biologically favorable CMP as much as possible, when using an adjusted cacao which is composed of a conventional cacao powder. US-A-4,784,866 discloses a process of alkalization of cocoa in aqueous phase comprising mixing cocoa meal or liquor and an alkalizing agent in aqueous phase and heating in an enclosed vessel under a pressure of from above 1 atm to 3 atm at a temperature below 110°C without evaporation of water while introducing an oxygen-containing gas into the vessel during at least a part of the mixing and heating for maintaining the excess pressure.

US-A-4,758444 describes a process for producing cocoa powder wherein alkali treated cacao mass or cocoa powder is mixed with hot water maintained at 70° to 130° C to dissolve a water-soluble portion of the cacao beans in hot water. Alternately, the cacao mass or cocoa powder is mixed with hot water containing an alkali and maintained at 70° to 130° C to dissolve the water-soluble portion in hot water and simultaneously to treat the cacao mass or cocoa powder with the alkali.

Basic objects of the invention, therefore, are to provide a process for preparing a cacao powder under such treating conditions which do not reduce the amount of CMP present in cacao beans as it is possible, a cacao powder rich inCMP obtained by the process, and a cacao preparation comprising the cacao powder.

A final object of the invention lies in providing a good cacao powder which is not spoiled in taste, in spite of the fact that its CMP content is maintained on a higher level, which makes an easy intake of CMP possible which is excellent in functions

The inventors have energetically studied and investigated for solving said problems and reaching said objects. As a result, they have obtained such findings that established the invention, i.e. that the preparation of the cacao powder rich in CMP ( abbreviated hereinafter as "HPC") is possible by adjusting roasting conditions of cacao nibs. Furthermore in a preferred embodiment the astringency and bitterness inherent to CMP can be sharply inhibited by adjusting treating conditions with an alkali, prior to the roasting treatment, in spite of the fact that the cacao powder has a relatively high CMP content and although the amount of CMP is somewhat more reduced than the amount contained in the cacao beans.

In particular, the invention relates to a process for preparing a cacao powder having a cacao polyphenol content of 7 - 11% by weight, which is characterized by subjecting cacao nibs to an alkali treatment under water content conditions of 3 - 10% by weight, or subjecting cacao nibs to a roasting treatment by setting the initial water content of 3 - 10% by weight, without carrying out the alkali treatment, and then carrying out steps of grinding, oil expression and pulverization, in order. The invention also relates to the cacao powder obtained by the process and to a prepared cacao composed of the cacao powder.

The basic matter of the process according to the invention lies in that the amount of CMP present in the cacao beans is not reduced, as possible, through the steps for preparing the cacao powder. It is thus preferred to use as much as possible cacao beans of a kind and from a place of production that contain CMP in a higher level, in order to obtain a cacao powder rich in CMP. For instance, cacao beans produced in Ghana, which have been widely selected for preparing the cacao powder contain CMP of about 3.3% by weight in raw beans. Since the cacao beans produced in Ecuador show a higher CMP content of 3.6 - 6.3% by weight, it is advantageous to use the cacao beans produced in Ecuador, since the amount of CMP is higher than in those produced in Ghana. Cacao beans produced in Venezuela can be exemplified as those containing CMP in a higher amount, although not as high as those produced in Ecuador.

In case of carrying out the process according to the invention, the taste of finally obtained cacao powder becomes good, if an alkali is added to reach a final pH to 5.0 - 7.5 and more preferably to 6.6 - 7.0, during the alkali treatment. When potassium carbonate, sodium carbonate or the like is used as the alkali, it is preferable to add the same in an amount not exceeding 2.0% by weight to the cacao nibs.

It is preferable to set the water content in the cacao nibs in a reaction vessel for subjecting the cacao nibs to the alkali treatment in a level as low as possible, so that CMP presenting in the cacao beans remains in an amount as high as possible. Since moisture contained in the cacao nibs *per se* is 3 - 7% by weight in usual cases, it is necessary to carry out the treatment under water content conditions of 3 - 10% by weight, by possibly adding water in an amount not exceeding 7% by weight.

Further, it is preferable to carry out the alkali treatment under control of temperature in the range of 50 - 100°C and to use a stirring time period in the range of 5 - 30 minutes to finish the reaction under lower temperature conditions and a period of time as short as possible, so to remain the CMP level as high as possible.

In the roasting step for carrying out the process according to the invention, it is preferable to set a shorter roasting period of time, in order to remain CMP presenting in the cacao beans in a maximum level, but it is necessary to consider various conditions on the amount of added water, temperature, roasting period of time and others, in response to the kind of the cacao beans for taking out the inherent flavor and taste due to the kind of cacao beans. In a usual case, such conditions for the roasting treatment are preferable which establish that the initial water content is 3- 10% by weight, the final temperature of the cacao nibs is 120 - 125°C, and the roasting period of time is about 30 - 50 minutes. For instance, cacao nibs with a nice taste can be obtained by (if necessary,) adding water to make the water content of the cacao nibs at the starting time for roasting to be 10% by weight and then roasting the same for 40 minutes, so as to reach final temperature of the roasted cacao nibs of 123°C (final moisture content of the roasted cacao rib : about 2% by weight), when cacao beans produced in Ecuador are selected. In case of the cacao beans produced in Ecuador, bright flavor inherent to the beans becomes strong, but grassy-smelling generates, when the final temperature of cacao nib is lower than 123°C. Their flavor becomes poor and their taste becomes heavy feeling when the roasting is carried out until the final temperature of cacao nibs exceeds 123°C.

It is preferable that the moisture content of the roasted cacao nibs is 1 - 5% by weight and in such a range of the moisture content, almost no lowering of CMP content occurs in the subsequent grinding and oil expressing steps.

The subsequent step of oil expression from the roasted cacao nibs can be carried out in a conventional manner. In the conventional cacao powder, there are two types containing oil as final content of 12 - 14% by weight and 22 - 24% by weight, but it is preferable to carry out the oil expression, so that the final oil content becomes 12 - 14% by weight, to increase CMP content therein. When the process according to the invention is carried out by using cacao beans produced in Ecuador, HPC containing CMP of 7 - 11% by weight can be obtained by carrying out the oil expression, so as to make the final oil extent to 12% by weight. In this case, HPCs containing CMP of 7 - 9% by weight have proper astringency and bitterness to show nice taste.

When the oil expression is carried out, so as to make final oil extent to 22% by weight, HPCs containing CMP of 6 - 10% by weight can be obtained.

The prepared cacao can be obtained by composing a saccharoid, powdered milk and edible additive(s) in the HPC and mixing the same or agglomerating the mixture in the form of a powder in a conventional manner.

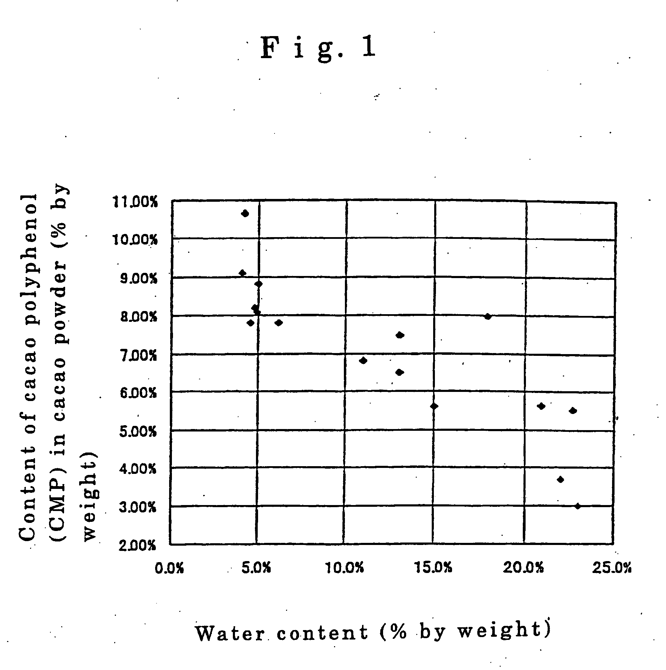

Fig. 1 shows the relation between the moisture content in the cacao nibs which has been alkali treated, or which is just prior to the roasting treatment and without the alkali treatment and the content of cacao polyphenol (CMP) in finally obtained cacao powder.

Now, the invention shall be explained in more detail and concretely with reference to Examples, Comparative Examples and Test Examples.

A measurement of cacao polyphenol in the cocoa powder obtained by the Examples and Comparative Examples had been made by the following method. Namely, the resulting cacao powder was treated by hexane for defatting and treated by water-containing methanol for extracting CMP in the cacao powder, and then an amount of CMP was measured by the prussian blue method. As the water-containing metanol, a 50% aqueous methanol solution was used, and the prussian blue method was carried out in accordance with that described in "Methods in Enzymology", Vol. 234, pages 432 - 433 (edited by Packer), in which commercially available epicatechin was selected as standard compound.

### Example 1

To cacao nibs obtained in a conventional manner from cacao beans produced in Ecuador, a solution of 0.9% by weight of potassium carbonate in 1.35% by weight of water was added and pH thereof was adjusted to 6.8. The resulting solution was poured into a reaction vessel with jacket temperature at 100 °C, and stirring was started, when temperature of the solution reached 50°C and continued for 15 minutes for alkali treating the cacao nibs. Temperature of the solution at the time when the reaction was just finished was 80°C, and the moisture content of the alkali-treated cacao nibs was 6.1% by weight. To the alkali treated cacao nib, water of 3.8% by weight was added and roasting thereof was initiated by an indirect heating type roaster. The roasting treatment was carried out until the final temperature of the cacao nibsreached 123°C for 40 minutes. After grinding the roasted cacao nibs, oil expression was carried out, so as to make the oil content to be 12% by weight, and then the product was pulverized to prepare HPC.

### Example 2

HPC was prepared by the process similar to that described in Example 1, except that the alkali treatment was omitted and roasting treatment was initiated under initial conditions of moisture content of 5.0% by weight and pH of 5.7.

### Example 3

To 16% by weight of HPC obtained by Example 1, 40% by weight of sugar, 23% by weight of lactose, 15% by weight of total powdered milk, 5%by weight of defatted milk powder and 1% by weight of other edible material(s) were composed to prepare a powdery prepared cacao or the powdery prepared cacao was subjected to wet agglomeration to prepare prepared cacao granules comprising HPC.

The prepared cacao shows nice taste and was excellent in solubility. It contains CMP in a twice as high amount, in comparison with a prepared cacao having the same composition as the above, except for using a general or conventional cacao powder (CMP content : 3.9% by weight) and having been prepared in accordance with a process similar to that described in Comparative Example 1 given later, except for using cacao nibs derived from cacao beans produced in Ghana expressing the oil until oil content reached 22% by weight.

### Comparative Example 1

A process similar to that described in Example 1 was carried out to prepare cacao powder, except that to the cacao nibs derived from cacao beans produced in Ecuador, a solution of 1.8% by weight of potassium carbonate in 12.7% by weight of water was added, and the pH thereof was 6.8. The resulting solution was poured into a reaction vessel with jacket temperature of 120°C. An alkali treatment was carried out at 120 °C under steam pressure and stirring was done for 20 minutes. Then roasting was carried out with the alkali-treated cacao nibs with a water content of 23.0% by weight.

### Comparative Example 2

A process similar to that described in Example 1, except that to cacao nibs derived from cacao beans produced in Ecuador, water of 10.0% by weight was added and pH thereof was 6.0, a treatment of heating at 120°C under steam pressure and stirring for 20 minutes in a reaction vessel with jacket temperature of 120°C was carried out in lieu of the alkali treatment, and then roasting was carried out to the resulting cacao nibs with water content of 23.0% by weight.

### Test Example 1

CMP content in the cacao powder obtained by Examples 1 and 2 as well as Comparative Examples 1 and 2 was measured, respectively, and the taste of each cacao powder was evaluated. Results are shown in the following Table 1.

**Table 1**

| | CMP content | Taste evaluation |
|---|---|---|
| Example 1 | 7.8 (% by weight) | good : weak astringency and bitterness, and light aroma. |
| Example 2 | 8.8 | approve : somewhat strong astringency and bitterness, and there is favorable aroma. |
| Comparative Example 1 | 3.0 | good : no astringency and bitterness, and nice favorable aroma. |
| Comparative Example 2 | 3.7 | approve noticeable astringency and bitterness, and there is favorable aroma. |

### Test Example 2

Various cacao powders were prepared according to a process similar to that described in Example 1, except that the water contents of the alkali-treated cacao nibs are different, and to the process similar to Example 2, except that the water contents of the non-alkali treated cacao nibs just before the roasting treatment are different, to compare the CMP contents in each cacao powder and the initial water contents of the cacao nibs in the roasting treatment.

Results are shown in Figure 1. It becomes clear that the repression of the water content in the cacao nibs during its alkali treatment to values as low as possible is preferable, in order to increase remaining amount of CMP in the cacao powder, and that the CMP content in the cacao powder can be made to 7% by weight or more, when the water content in the cacao nibs at the beginning of the roasting treatment is repressed to 10% by weight or less.

Cacao beans contain polyphenols which have been recently reported as substances having biologically favorable functions including anti-oxidating action, anti-dental cariesing action, action for preventing arteriosclerosis and others. However, the polyphenols show astringency and bitterness and thus can not be considered as a preferable ingredient from view point of the taste. Hitherto, therefore, cacao beans containing polyphenols in lower amounts have been used for preparing cacao powder, and conventional processes for preparing cacao powder contain a step for lowering the content of the polyphenols. In contrast, the invention provides cacao powder with remaining polyphenols in an amount as high as possible which shows an excellent taste. Therefore, the cacao powder according to the invention is excellent in its functions.

## Claims

1. A process for preparing a cacao powder having a cacao polyphenol content of 7 - 11 % by weight **characterized in that** after roasting cacao nibs under conditions of an initial water content of 3 - 10% by weight, the steps grinding, oil expression and pulverization are carried out consecutively.

2. A process as claimed in Claim 1, **characterized in that** said oil expression is carried out, in such a way as to make the final oil content of the cacao powder to be 12 - 14% by weight

3. A process as claimed in Claim 1 or 2, **characterized in that** the cacao nibs are subjected to an alkali treatment under the conditions of a water content of 3 - 10% by weight, prior to the roasting treatment.

4. A process as claimed in Claim 3, **characterized in that** said alkali treatment is carried out by adding an alkali to the cacao nibs in an amount not exceeding 2.0% by weight and adjusting final pH to 5.0 - 7.5.

5. A process as claimed in any one of Claims 1 - 4, **characterized in that** said cacao nibs are produced from cacao beans in at least one of Ecuador and Venezuela.

6. A cacao powder having a cacao polyphenol content of 7 - 11 % by weight obtained by the process described in any one of Claims 1-5.

7. A cacao powder as claimed in Claim 6, **characterized in that** the cacao polyphenol content is 7 - 9% by weight.

8. A cacao preparation **characterized in that** it comprises cacao powder according to Claim 6 or 7.

9. A cacao powder having a cacao polyphenol content of 6-11% by weight.

10. The cacao powder as claimed in claim 9, **characterized in that** the caco polyphenol content is 7-11 % by weight.

11. A cacao preparation **characterized in that** it comprises cacao powder according to Claim 9 or 10

## Patentansprüche

1. Verfahren zur Herstellung von Kakaopulver mit einem Kakaopolyphenolgehalt von 7 bis 11 Gew.-%, **dadurch gekennzeichnet, dass** nach dem Rösten von Kakaobohnensplittern (cacao nibs) unter Bedingungen eines anfänglichen Wassergehalts von 3 bis 10 Gew.-% die Schritte Mahlen, Herauspressen des Öls und Pulverisieren nacheinander ausgeführt werden.

2. Verfahren gemäß Anspruch 1, **dadurch gekennzeichnet, dass** das Herauspressen des Öls so durchgeführt wird, dass der endgültige Ölgehalt des Kakaopulvers 12 bis 14 Gew.-% beträgt.

3. Verfahren gemäß Anspruch 1 oder 2, **dadurch gekennzeichnet, dass** die Kakaobohnensplitter vor der Röstbehandlung einer Laugebehandlung unter den Bedingungen eines Wassergehalts von 3 bis 10 Gew.-% unterzogen werden.

4. Verfahren gemäß Anspruch 3, **dadurch gekennzeichnet, dass** die Laugebehandlung durch Hinzufügen einer Lauge zu den Kakaobohnensplittern in einer Menge, die 2,0 Gew.-% nicht überschreitet, und durch Einstellen des endgültigen pH-Werts auf 5,0 bis 7,5 durchgeführt wird.

5. Verfahren gemäß einem der Ansprüche 1 bis 4, **dadurch gekennzeichnet, dass** die Kakaobohnensplitter aus Kakaobohnen aus mindestens einem von Ecuador und Venezuela hergestellt sind.

6. Kakaopulver mit einem Kakaopolyphenolgehalt von 7 bis 11 Gew.-%, erhalten durch das in einem der Ansprüche 1 bis 5 beschriebene Verfahren.

7. Kakaopulver gemäß Anspruch 6, **dadurch gekennzeichnet, dass** der Kakaopolyphenolgehalt 7 bis 9 Gew.-% beträgt.

8. Kakaozubereitung, **dadurch gekennzeichnet, dass** sie Kakaopulver gemäß Anspruch 6 oder 7 umfasst.

9. Kakaopulver mit einem Kakaopolyphenolgehalt von 6 bis 11 Gew.-%.

10. Kakaopulver gemäß Anspruch 9, **dadurch gekennzeichnet, dass** der Kakaopolyphenolgehalt 7 bis 11 Gew.-% beträgt.

11. Kakaozubereitung, **dadurch gekennzeichnet, dass** sie Kakaopulver gemäß Anspruch 9 oder 10 umfasst.

## Revendications

1. Procédé pour préparer une poudre de cacao ayant une teneur en polyphénols du cacao de 7 - 11 % en masse **caractérisé en ce qu'**après la torréfaction de fèves de cacao décortiquées dans des conditions d'une teneur en eau initiale de 3 - 10 % en masse, les étapes de broyage, d'expression de l'huile et de pulvérisation sont accomplies consécutivement.

2. Procédé selon la revendication 1 **caractérisé en ce que** ladite expression de l'huile est accomplie de manière à amener la teneur en huile finale de la poudre de cacao à être 12 - 14 % en masse.

3. Procédé selon la revendication 1 ou 2 **caractérisé en ce que** les fèves de cacao décortiquées sont soumises à un traitement avec un alcali dans les conditions d'une teneur en eau de 3 - 10 % en masse avant le traitement de torréfaction.

4. Procédé selon la revendication 3 **caractérisé en ce que** ledit traitement avec un alcali est mis en oeuvre en ajoutant un alcali aux fèves de cacao décortiquées en une quantité ne dépassant pas 2,0 % en masse et en ajustant le pH final à 5,0 - 7,5.

5. Procédé selon l'une quelconque des revendications 1 - 4 **caractérisé en ce que** lesdites fèves de cacao décortiquées sont produites à partir de fèves de cacao dans au moins l'un parmi l'Equateur et le Venezuela.

6. Poudre de cacao ayant une teneur en polyphénols du cacao de 7 - 11 % en masse obtenue par le procédé selon l'une quelconque des revendications 1-5.

7. Poudre de cacao selon la revendication 6 **caractérisée en ce que** la teneur en polyphénols du cacao est 7 - 9 % en masse.

8. Préparation de cacao **caractérisée en ce qu'**elle comprend une poudre de cacao selon la revendication 6 ou 7.

9. Poudre de cacao ayant une teneur en polyphénols du cacao de 6 - 11 % en masse.

10. Poudre de cacao selon la revendication 9 **caractérisée en ce que** la teneur en polyphénols du cacao est 7 - 11 % en masse.

11. Préparation de cacao **caractérisée en ce qu'**elle comprend la poudre de cacao selon la revendication 9 ou 10.
